# FASCICULE DE BREVET EUROPEEN

(11) **EP 0 420 755 B1**
(45) Date de publication et mention de la délivrance du brevet: **10.05.1995**
(21) Numéro de dépôt: 90402668.9
(22) Date de dépôt: 27.09.1990
(51) Int. Cl.: G11B 5/187, G11B 5/21, G11B 5/31

(54) **Procédé de réalisation d'une tête d'enregistrement magnétique et tête obtenue par ce procédé**
Herstellungsverfahren eines Magnetaufzeichnungskopfes und nach diesem Verfahren erhaltener Kopf
Process for producing a magnetic recording head and head obtained by this process

(30) Priorité: 29.09.1989 FR 8912768
(43) Date de publication de la demande: 03.04.1991
(73) Titulaire: COMMISSARIAT A L'ENERGIE ATOMIQUE, 75015 Paris Cédex 15 (FR)
(72) Inventeur: Lazzari, Jean-Pierre, F-38700 Corenc (FR)
(74) Mandataire: Signore, Robert

(56) Documents cités:
- EP-A- 0 262 028
- EP-A- 0 332 320
- US-A- 4 399 479
- IBM TECHNICAL DISCLOSURE BULLETIN. vol. 17, no. 11, avril 1975, ARMONK,N.Y.,USA pages 3446 - 3449; L.T. ROMANKIW et al.: "BATCH FABRICATION OF KEYHOLE TYPE MAGNETIC RECORDING HEADS"
- PATENT ABSTRACTS OF JAPAN vol. 8, no. 252 (P-314)(1689) 17 novembre 1984, & JP-A-59 121611 (FUJITSU K.K.) 13 juillet 1984,
- PATENT ABSTRACTS OF JAPAN vol. 9, no. 109 (P-355)(1832) 14 mai 1985, & JP-A-59 229724 (MITSUBISHI DENKI K.K.) 24 décembre 1984,

## Description

La présente invention a pour objet un procédé de réalisation d'une tête d'enregistrement et une tête obtenue par ce procédé. Elle trouve une application dans l'enregistrement magnétique sur des supports de très faible largeur, de l'ordre du micron ou moins.

La tête magnétique de l'invention est du genre horizontal à couches minces. Une telle tête est décrite par exemple dans EP-A-0 152 326. Plus particulièrement, l'invention perfectionne un procédé de réalisation de ces têtes tel qu'on le connaît par le document FR-A-2 604 021 (ou ses correspondants EP-0 262 028 et US-A-4 837-924).

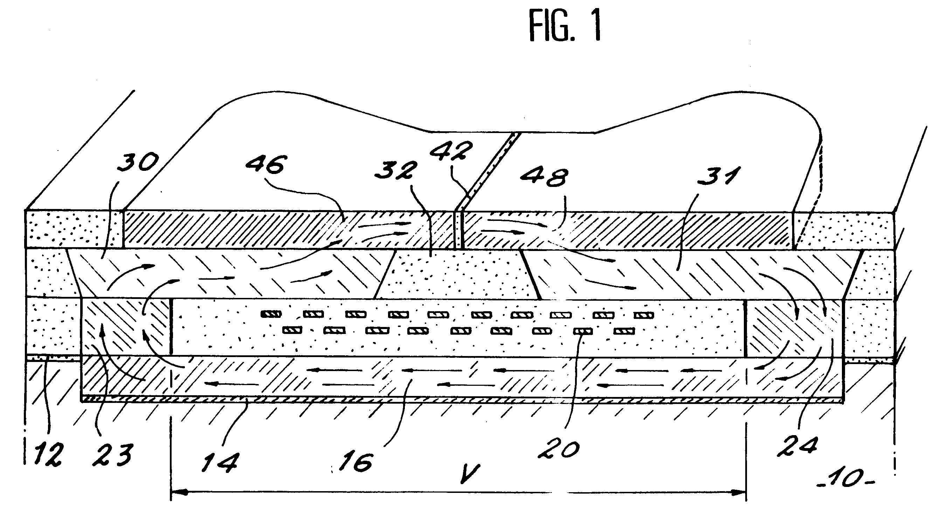

La figure 1 rappelle la structure obtenue par ce procédé. On y voit un substrat 10, en général en silicium, dans lequel est enterrée une pièce polaire inférieure 16 formée par dépôt électrolytique sur une électrode 14 ; un double bobinage conducteur 20 ; deux piliers magnétiques 23, 24, entouré chacun par une partie du bobinage ; une pièce polaire supérieure formée par deux concentrateurs de flux 30, 31 séparés par un îlot central amagnétique 32 ; et enfin deux pièces polaires 46, 48 séparées par un espaceur amagnétique 42 définissant un entrefer.

La largeur de l'entrefer est d'environ 20 microns et l'épaisseur des pièces polaires 46, 48 de l'ordre de quelques microns (la figure 1 étant sensiblement à l'échelle pour ce qui est de la partie supérieure).

Bien que donnant satisfaction à certains égards, une telle tête magnétique présente quelques inconvénients.

Tout d'abord, lorsque la largeur de la piste à lire diminue et atteint des valeurs inférieures ou égales à un micron, l'aimantation de la couche magnétique au repos, sous l'effet de l'anisotropie de forme très marquée de la pièce polaire supérieure, tend à s'orienter parallèlement à la grande dimension de la pièce polaire. De ce fait, la perméabilité de la pièce polaire diminue.

Par ailleurs, la couche magnétique peut se briser en domaines, ce qui provoque, à la lecture, un bruit de paroi important.

Ces effets, qui se traduisent, le premier, par une réduction de l'amplitude du signal, et le second, par une réduction du rapport signal sur bruit, sont très gênants pour les faibles largeurs de pistes, où le signal de lecture est déjà intrinsèquement faible.

Une autre augmentation du bruit vient de la partie du bobinage débordant de chaque côté des pièces polaires supérieures. Bien que plus éloignées de la piste que ne l'est la pièce polaire supérieure et offrant une résolution plus faible que celle de l'entrefer, les parties latérales du bobinage n'en captent pas moins un flux parasite provenant des pistes adjacentes à la piste lue. Il en résulte un bruit qui n'est plus totalement négligeable aux faibles largeurs de pistes.

La présente invention a justement pour but de remédier à ces inconvénients.

A cette fin, elle modifie le procédé de réalisation de l'art antérieur dans ses étapes ultimes, pour obtenir une pièce polaire supérieure de forme allongée dans le sens de la hauteur, c'est-à-dire, en pratique, beaucoup plus haute que large. Alors, l'aimantation pourra tourner plus facilement dans le plan vertical, ce qui diminuera le bruit, même pour de très faibles largeurs de piste (de l'ordre du micron ou moins). Les champs démagnétisants, qui pourraient s'opposer à la rotation de l'aimantation dans le plan principal des pièces polaires, restent en effet très faibles dans ce cas.

Par ailleurs, la perméabilité magnétique est améliorée même si la largeur de la piste est faible.

En outre, du fait de l'augmentation de la section droite de la pièce polaire, l'augmentation relative de la hauteur de la pièce polaire éloigne le plan de vol du plan du bobinage, ce qui réduit les bruits parasites liés aux pistes adjacentes.

Enfin, se trouve éliminé l'inconvénient des têtes magnétiques pour dérouleur de bandes où les pièces polaires sont soumises à une usure importante pouvant aller jusqu'à quelques microns et risquant de mettre à nu les couches inférieures de la tête. Si cette usure n'est pas supprimée dans l'invention, elle demeure sans incidence sur le fonctionnement de la tête puisque l'épaisseur des pièces polaires excède largement cette usure.

La présente invention a donc pour premier objet un procédé de réalisation d'une tête pour enregistrement magnétique défini à la revendication 1.

La présente invention a également pour objet une tête magnétique définie à la revendication 4.

TW est de préférence compris entre un et dix microns.

De toute façon, les caractéristiques et avantages de l'invention apparaîtront mieux à la lumière de la description qui suit. Cette description porte sur des exemples de réalisation donnés à titre explicatif et nullement limitatif et se réfère à des dessins annexés sur lesquels :
- la figure 1, déjà décrite, montre une tête magnétique selon l'art antérieur ;
- la figure 2 montre diverses étapes du procédé de réalisation selon l'invention ;
- la figure 3 montre l'allure de l'aimantation dans les pièces polaires supérieures.

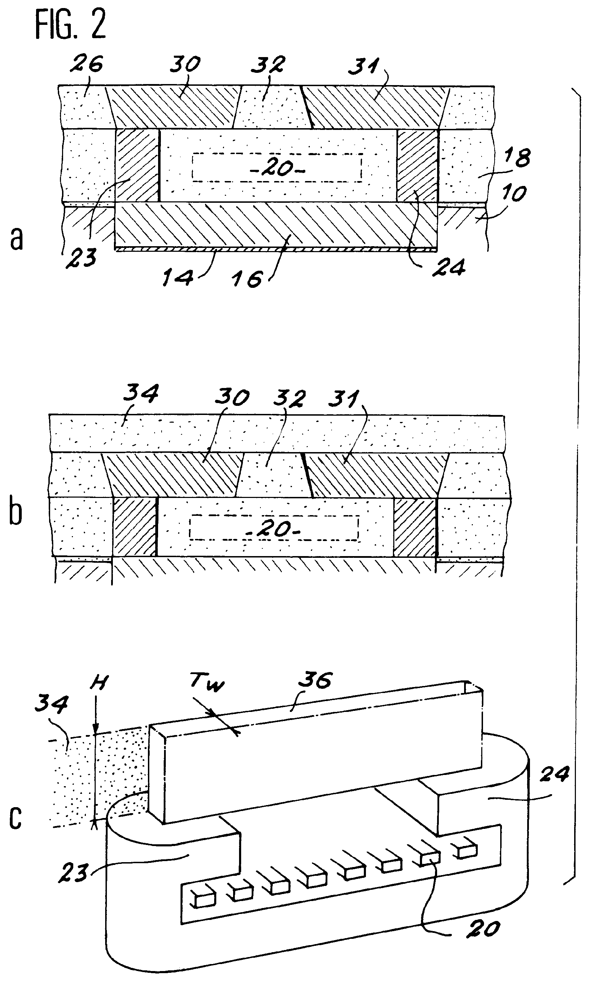

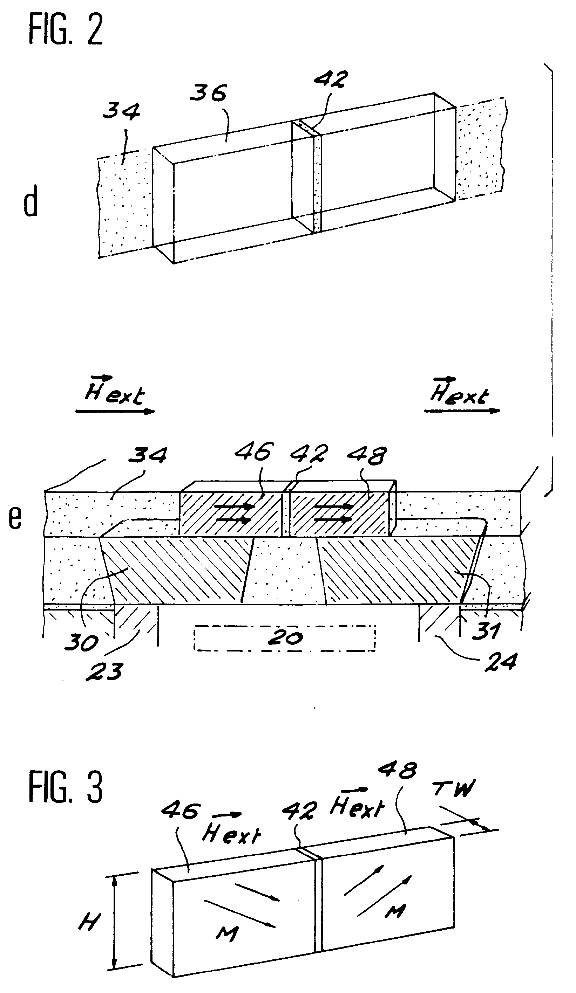

Le procédé de l'invention comprend un certain nombre d'opérations préliminaires qui sont connues et décrites dans le document FR-A-2 604 021 déjà cité (EP-0 262 028, US-A-4 837 924) (gravures, dépôt de couche conductrice pour constituer une électrode, croissance électrolytique, etc...). Ces opérations préliminaires connues aboutissent à un composant qui est illustré sur la partie (a) de la figure 2 (partie qui correspond exactement à la partie (i) de la figure 5 du document cité). On trouve, dans ce composant, un substrat 10, une couche électrode 14, une pièce polaire inférieure 16, deux piliers 23, 24, une couche isolante 18 dans laquelle est enterré un bobinage 20, un îlot central isolant 32, et deux concentrateurs 30, 31 dans une couche isolante 26.

La première opération caractéristique du procédé de l'invention consiste à déposer une couche isolante amagnétique 34 (partie b). Cette couche est épaisse, par exemple de 4 à 8 microns. Elle peut être en silice ou en tout autre matériau résistant bien à l'usure.

Dans cette couche amagnétique 34 on grave une tranchée étroite 36 s'étendant d'un pilier à l'autre. Cette tranchée a une largeur égale à la largeur de la piste à lire. En pratique, elle est de l'ordre du micron ou moins. Sa hauteur est par construction égale à la hauteur H de la couche amagnétique 34 et est donc très supérieure à la largeur TW (par exemple 8 fois la largeur) (figure 2c).

On forme au centre de cette tranchée et sur toute sa hauteur, un espaceur 42 amagnétique. Le moyen d'obtenir un tel espaceur est déjà décrit dans le document cité (Fig. 5, k, l).

On fait croître ensuite électrolytiquement, à l'intérieur de la tranchée 36 et de part et d'autre de l'espaceur 42, deux pièces polaires 46, 48. Pour cela, on prend les piliers 23, 24 comme électrodes ou l'on dépose au préalable une couche conductrice au fond de la tranchée (figure 2e).

Les pièces polaires supérieures ainsi obtenues présentent la forme d'un parallélépipède rectangle ayant une largeur de l'ordre du micron et une hauteur très supérieure, de l'ordre de plusieurs microns.

Le matériau constituant les pièces polaires supérieures peut être le même que celui qui a servi à former le reste du circuit, du fer-nickel par exemple.

Lorsque l'on fait croître les pièces polaires 46, 48, on applique à l'ensemble un champ magnétique extérieur Hext dirigée perpendiculairement à l'espaceur 42, afin d'orienter l'axe de facile aimantation dans le plan principal des pièces polaires, comme indiqué par les flèches dessinées sur la figure 2e.

La figure 3 montre comment cette aimantation M peut tourner dans le plan "vertical" (plan qui est parallèle à la hauteur de la pièce polaire) sous l'influence d'un champ H provenant de la piste lue. Cette rotation s'effectue sans bruit de paroi.

L'invention qui vient d'être décrite convient particulièrement bien à l'écriture et à la lecture de supports d'enregistrement à haute densité d'information.

## Revendications

1. Procédé de réalisation d'une tête pour enregistrement magnétique comprenant les opérations suivantes :
- sur un substrat (10), formation d'une pièce polaire inférieure (16),
- sur cette pièce polaire inférieure (16), formation d'un double bobinage conducteur (20),
- à chaque extrémité de la pièce polaire inférieure (16), formation d'un pilier magnétique (23, 24), chaque pilier étant entouré par l'un des bobinages,
- formation de deux pièces polaires supérieures s'appuyant sur les deux piliers (23, 24) et présentant un entrefer constitué par un espaceur amagnétique (42),
ce procédé étant caractérisé par le fait que, pour former les pièces polaires supérieures, on met en oeuvre les opérations suivantes :
- sur l'ensemble constitué par la pièce polaire inférieure (16), le double bobinage (20) et les deux piliers (23, 24), on dépose une couche de matériau amagnétique (34) de hauteur H supérieure à la largeur TW désirée pour l'entrefer et de l'ordre de quelques microns,
- dans cette couche amagnétique (34), on grave une tranchée étroite (36) s'étendant d'un pilier (23) à l'autre (24), cette tranchée ayant une largeur de l'ordre du micron égale à ladite largeur TW désirée pour l'entrefer, et une hauteur égale à la hauteur H de la couche amagnétique et très supérieure à la largeur TW,
- on forme au centre de cette tranchée et sur toute sa hauteur, un espaceur amagnétique (42),
- on fait croître électrolytiquement à l'intérieur de la tranchée (36) et de part et d'autre de l'espaceur (42) deux pièces polaires (46, 48) jusqu'à ce qu'elles affleurent la couche amagnétique (34).

2. Procédé selon la revendication 1, caractérisé par le fait que, pendant l'opération de croissance électrolytique des deux pièces polaires (46, 48), on applique à ces pièces un champ magnétique (Hext) perpendiculaire à l'espaceur (42).

3. Procédé selon la revendication 1, caractérisé par le fait que la couche de matériau amagnétique (34) présente une épaisseur comprise entre 4 et 8 microns.

4. Tête pour enregistrement magnétique, obtenue par le procédé de la revendication 1, comprenant :
- sur un substrat (10), une pièce polaire inférieure (16),
- sur cette pièce polaire inférieure (16), un double bobinage conducteur (20),
- à chaque extrémité de la pièce polaire inférieure (16) un pilier magnétique (23, 24), chaque pilier étant entouré par l'un des bobinages,
- deux pièces polaires supérieures présentant la forme d'un parallélépipède rectangle (46, 48) s'appuyant sur les deux piliers (23, 24) et présentant un entrefer constitué par un espaceur amagnétique (42),
cette tête étant caractérisée par le fait que les pièces polaires supérieures occupe une tranchée gravée dans une couche amagnétique (34), cette tranchée ayant une largeur TW de l'ordre du micron et une hauteur H très supérieure à la largeur TW et de l'ordre de plusieurs microns, les deux pièces polaires (46, 48) étant séparées par un espaceur amagnétique (42) définissant un entrefer.

## Patentansprüche

1. Herstellungsverfahren eines Magnetaufzeichnungskopfes, das die folgenden Schritte umfaßt:
- Bildung eines unteren Polschuhs (16) auf einem Substrat (10),
- Bildung einer doppelten, leitenden Wicklung (20) auf diesem unteren Polschuh (10),
- Bildung eines magnetischen Pfeilers (23, 24) an jedem Ende des unteren Polschuhs (16), wobei jeder Pfeiler von einer der Wicklungen umgeben wird,
- Bildung von zwei oberen Polschuhen, die sich auf den beiden Pfeilern (23, 24) abstützen und einen Spalt aufweisen, gebildet durch einen nichtmagnetischen Spacer (42),
wobei dieses Verfahren
**dadurch gekennzeichnet** wird, daß man zu Bildung der oberen Polschuhe folgende Schritte ausführt:
- man scheidet auf dem durch den unteren Polschuh (16), der Doppelwicklung (20) und den beiden Pfeilern (23, 24) gebildeten Aufbau eine Schicht (34) aus nichtmagnetischem Material ab, deren Höhe H größer ist als die gewünschte Breite TW des Spalts und in der Größenordnung von einigen Mikrometern,
- in diese nichtmagnetische Schicht (34) ätzt man einen schmalen Graben (36), der sich von einem Pfeiler (23) zum anderen (24) erstreckt, wobei dieser Graben eine Breite in der Größenordnung eines Mikrometers hat, gleich der besagten, für den Spalt gewünschten Breite TW, und eine Höhe gleich der Höhe H der nichtmagnetischen Schicht und sehr viel größer als die Breite TW,
- man bildet in der Mitte dieses Grabens und über seine gesamte Höhe einen nichtmagnetischen Spacer (42),
- man läßt elektrolytisch im Innern des Grabens (36) und beiderseits des Spacers (42) zwei Polschuhe (46, 48) aufwachsen, bis sie auf gleicher Höhe mit der nichtmagnetischen Schicht (34) sind.

2. Verfahren nach Anspruch 1, dadurch gekennzeichnet, daß man während des Schritts des elektrolytischen Aufwachsens der beiden Polschuhe (46, 48) auf diese beiden Teile ein Magnetfeld (Hext) anwendet, senkrecht zum Spacer (42).

3. Verfahren nach Anspruch 1, dadurch gekennzeichnet, daß die Schicht (34) aus nichtmagnetischem Material eine Dicke zwischen 4 und 8 »m aufweist.

4. Magnetaufzeichnungskopf, erzeugt durch das Verfahren des Anspruchs 1, umfassend:
- auf einem Substat (10) einen unteren Polschuh (16),
- auf diesem unteren Polschuh (16) eine leitende Doppelwicklung (20),
- an jedem Ende des unteren Polschuhs (16) einen magnetischen Pfeiler (23, 24), wobei jeder Pfeiler umgeben ist von einer der Wicklungen,
- zwei obere Polschuhe mit der Form eines rechteckigen Parallelflachs (46, 48), die sich auf den beiden Pfeilern (23, 24) abstützen und einen Spalt aufweisen, der gebildet wird durch einen nichtmagnetischen Spacer (42),
wobei dieser Kopf **dadurch gekennzeichnet** ist, daß die Polschuhe einen in eine nichtmagnetische Schicht (34) geätzten Graben besetzen, dieser Graben eine Breite TW in der Größenordnung eines Mikrometers und eine Höhe H aufweist, sehr viel größer als die Breite TW und in der Größenordnung von mehreren Mikrometern, und die beiden Polschuhe (46, 48) getrennt sind durch einen nichtmagnetischen Spacer (42), der einen Spalt definiert.

## Claims

1. Process for the production of a head for magnetic recording purposes, comprising the following operations:
- on a semiconductor substrate (10), the formation of a lower pole (16) piece,
- on said lower pole (16) piece, formation of a double conductor coil (20),
- at each end of the lower pole piece (16), the formation of a magnetic pillar (23,24), each pillar (23,24) being surrounded by one of the coils,
- the formation of the upper pole pieces bearing on the two pillars and having an air gap constituted by an amagnetic spacer (42),
characterized in that, for forming the upper pole pieces, the following operations are performed:
- on the entity constituted by the lower pole pieces (16), the double coil (20) and the two pillars (23,24) is deposited a layer of amagnetic material of height H greater than the width TW desired for the air gap and being a few microns,
- in said amagnetic layer (34) is etched a narrow trench (36) extending from one pillar (23) to the other (24), said trench having a width of approximately 1 micron equal to the width TW which is desired for the air gap and a height equal to the height H of the amagnetic layer and much greater than the width TW,
- in the centre of said trench (36) and over its entire height is formed an amagnetic spacer (42),
- two pole pieces (46,48) are allowed to grow electrolytically within the trench and on either side of the spacer until they are flush with the amagnetic layer (34).

2. Process according to claim 1, characterized in that, during the electrolytic growth of the two pole pieces (46,48), to said piece is applied a magnetic field (Hext) perpendicular to the spacer (42).

3. Process according to claim 1, characterized in that the amagnetic material layer (34) has a thickness between 4 and 8 microns.

4. Head for magnetic recording obtained by the process of claim 1, comprising:
- on a substrate (10), a lower pole piece (16),
- on said lower pole piece (16), a double conductor coil (20),
- at each end of the lower pole piece (16), a magnetic pillar (23,24), each pillar being surrounded by one of the coils,
- two upper pole pieces shaped like a rectangular parallelepiped (46,48) bearing on the two pillars (23,24) and having an air gap constituted by an amagnetic spacer (42),
- said head being characterized in that the upper pole pieces occupy a trench etched in an amagnetic layer (34), said trench having a width TW of approximately 1 micron and a height H which is much greater than the width TW and being several microns, the two pole pieces (46,48) being separated by an amagnetic spacer (42) defining an air gap.
